# EUROPÄISCHE PATENTSCHRIFT

(11) **EP 2 921 830 B1**
(45) Veröffentlichungstag und Bekanntmachung des Hinweises auf die Patenterteilung: **27.01.2021**
(21) Anmeldenummer: 15154114.1
(22) Anmeldetag: 06.02.2015
(51) Int. Cl.: F24C 15/10, G01J 5/06, G01J 5/00, G01J 5/04, F24C 7/08, H05B 6/06, G01J 5/08

(54) **KOCHFELD**
COOKING HOB
PLAQUE DE CUISSON

(30) Priorität: 28.02.2014 ES 201430276
(43) Veröffentlichungstag der Anmeldung: 23.09.2015
(73) Patentinhaber: BSH Bosch und Siemens Hausgeräte GmbH, 81739 München (DE)
(72) Erfinder: Imaz Martinez, Eduardo, 31500 Tudela (Navarra) (ES); Llorente Gil, Sergio, 50009 Zaragoza (ES); Martin Gomez, Damaso, 20012 Zaragoza (ES); Moya Albertin, Maria Elena, 50002 Zaragoza (ES)

(56) Entgegenhaltungen:
- EP-A1- 1 180 669
- EP-A1- 2 104 399
- WO-A1-2008/148529
- WO-A1-2014/001301
- DE-A1- 19 757 447
- DE-U1-202010 014 361
- GB-A- 2 062 428
- GB-A- 2 343 246
- JP-A- 2010 175 347
- US-A1- 2004 007 668

## Beschreibung

Die Erfindung geht aus von einem Kochfeld nach dem Oberbegriff des Anspruchs 1.

Es sind Kochfelder bekannt, die einen Infrarotsensor zur Temperaturermittlung nutzen.

Aus der EP1180669A1 ist eine Messanordnung zur pyrometrischen Temperaturbestimmung eines Garbehälters bekannt, welche Lichtleitelemente und Infrarot-Detektoren aufweist.

Aus der GB2062428A ist ein Mikrowellenofen bekannt, welcher an einer Oberseite einer Garkammer angeordnete Infrarotdetektionsmittel aufweist. Die Infrarotdetektionsmittel umfassen einen Infrarot-Detektor und ein Element, welches einen Eingangskonus für Infrarotstrahlung definiert.

Aus der GB2343246A ist ein abgeschirmter Temperatursensor für einen Ofen bekannt, welcher einen Deckel mit einem Eingangsloch für Infrarotstrahlung aufweist.

Aus der JP2010175347A ist ein Infrarotsensor bekannt, welcher optisch mit einem Lichtleitelement verbunden und zur Anordnung unterhalb einer Kochfeldplatte vorgesehen ist.

Aus der DE19757447A1 ist ein Temperaturberechnungsverfahren für ein Strahlungsthermometer bekannt, wobei das Strahlungsthermometer ein Gehäuse und ein IR-durchlässiges Fenster aufweist.

Aus der US2004/0007668A1 ist eine Vorrichtung zur Temperaturmessung mit einer optischen Faser bekannt, wobei die Faser einen Einkopplungsbereich und einen einem Infrarot-Detektor zugeordneten Auskopplungsbereich für Infrarotstrahlung definiert.

Aus der EP2104399A1 ist ein Induktionsheizgerät bekannt, welches einen Infrarotsensor und ein Lichtleitelement aufweist. Der nächstliegende Stand der Technik ist aus der WO2008/148529 A1 bekannt.

Die Aufgabe der Erfindung besteht insbesondere darin, eine gattungsgemäße Vorrichtung mit verbesserten Eigenschaften hinsichtlich einer verbesserten Temperaturermittlung bereitzustellen.

Die Aufgabe wird durch ein Kochfeld mit den Merkmalen des Patentanspruchs 1 gelöst. Vorteilhafte Ausgestaltungen und Weiterbildungen der Erfindung können den Unteransprüchen entnommen werden.

Die Erfindung geht aus von einem Kochfeld mit einer Kochfeldplatte, die eine Kochzone mit einer Messstelle aufweist, mit einer Hausgerätevorrichtung, insbesondere einer Kochfeldvorrichtung, welche zumindest ein Lichtleitelement und zumindest eine Sensoreinheit aufweist, wobei die Sensoreinheit zumindest einen Infrarotsensor aufweist und dazu vorgesehen ist, eine Intensität von durch das Lichtleitelement transmittiertem Infrarotlicht zu detektieren.

Es wird vorgeschlagen, dass in einem Bereich einer optischen Kopplung des Lichtleitelements und der Sensoreinheit eine zumindest für Infrarotlicht intransparente Umhüllung vorgesehen ist.

Unter einem "Lichtleitelement" soll insbesondere ein Element verstanden werden, das zumindest teilweise transparent für elektromagnetische Strahlung ist. Darunter, dass ein Element "teilweise transparent" für elektromagnetische Strahlung ist, soll insbesondere verstanden werden, dass das Element zumindest in einem Teilbereich der elektromagnetischen Strahlung, insbesondere zumindest in einem Teilbereich zwischen 300 nm und 5 µm, vorteilhaft zumindest in einem Teilbereich zwischen 900 nm und 3 µm vorzugsweise zumindest in einem Teilbereich zwischen 1,2 µm und 2,6 µm, insbesondere einem Teilbereich mit einer Breite von zumindest 100 nm, vorteilhaft zumindest 300 nm, vorzugsweise zumindest 500 nm, eine Transparenz von zumindest 30 %, insbesondere zumindest 50 %, vorteilhaft zumindest 70 %, aufweist. Unter einer "Sensoreinheit" soll insbesondere eine Einheit verstanden werden, die zumindest ein Sensorelement aufweist. Unter einem "Sensorelement" soll insbesondere ein Element verstanden werden, das dazu vorgesehen ist, eine zu bestimmende physikalische Größe, insbesondere eine Temperatur und/oder zumindest eine Strahlungskenngröße, insbesondere eine Strahlungsintensität, in zumindest eine andere, vorteilhaft elektrische, Kenngröße, insbesondere einen Strom, eine Spannung, einen Wiederstand, eine Kapazität und/oder eine Induktivität, umzuwandeln. Vorzugsweise weist die Sensoreinheit zumindest eine, vorzugsweise elektrische, Auswerteelektronik auf, die dazu vorgesehen ist, die andere, vorzugsweise elektrische, Kenngröße zu messen. Insbesondere weist die Auswerteelektronik zumindest einen Verstärkerschaltkreis auf. Vorteilhaft ist die Auswerteelektronik dazu vorgesehen, die Kenngröße in ein für eine Steuereinheit auswertbares, vorteilhaft digitales, Signal zu wandeln. Unter einem "Infrarotsensor" soll insbesondere ein Sensor verstanden werden, der dazu vorgesehen ist, eine Messung einer Intensität von Infrarotlicht vorzunehmen und insbesondere eine Wellenlänge und/oder eine Frequenz eines Intensitätsmaximums des Infrarotlichts zu bestimmen. Unter "Infrarotlicht" soll insbesondere elektromagnetische Strahlung mit einer Wellenlänge zwischen 7,8 × 10⁻⁷ und 1 × 10⁻³ m, entsprechend einem Frequenzbereich von 3 × 10¹¹ Hz und 4 × 10¹⁴ Hz, verstanden werden. Insbesondere soll eine Wärmestrahlung eines Garbehälters und/oder eines Garguts unter Infrarotlicht verstanden werden. Durch die Erfindung wird die Störstrahlung erheblich reduziert und die Genauigkeit bei der Tempertaturermittlung deutlich verbessert.

Ferner wird vorgeschlagen, dass die Umhüllung als Beschichtung ausgebildet ist. Unter einer "Beschichtung" soll eine insbesondere festhaftende Schicht aus einem Stoff verstanden werden, die auf eine Oberfläche zumindest eines Bauteils aufgebracht ist. Insbesondere weist die Beschichtung eine Materialstärke auf, die weniger als 10 %, vorzugsweise weniger als 5 % und insbesondere weniger als 1 % einer Materialstärke des Bauteils, auf dem die Beschichtung aufgebracht ist, beträgt. Insbesondere weist die Beschichtung eine zumindest im Wesentlichen gleichbleibende Materialstärke auf. Insbesondere weist die Beschichtung eine Materialstärke von weniger als 1 mm, insbesondere von weniger als 0,3 mm, vorteilhaft von weniger als 0,1 mm, bevorzugt von weniger als 0,03 mm und vorzugsweise von weniger als 0,01 mm auf. Unter einer "zumindest im Wesentlichen gleichbleibenden Materialstärke" soll insbesondere eine Materialstärke verstanden werden, deren Betrag sich im Bereich der Beschichtung des Bauteils um weniger als 20 %, insbesondere um weniger als 10 % und vorteilhaft um weniger als 5 % ändert.

Ferner wird vorgeschlagen, dass die Umhüllung als montierbares Schirmelement ausgebildet ist. Die Umhüllung ist insbesondere gehäuseförmig, beispielsweise kapsel- oder hülsenförmig, ausgebildet, um einen möglichst vollständigen Umschluss zu erreichen. Zur Erzielung einer möglichst einfachen Montage ist das Gehäuse form- und/oder kraftschlüssig mit der Sensoreinheit und dem Lichtleitelement verbunden.

Ferner wird vorgeschlagen, dass die Umhüllung einen niedrigen Emissionsgrad aufweist. Der Emissionsgrad eines Körpers gibt an, wie viel Wärmestrahlung er im Vergleich zu einem idealen Wärmestrahler, einem schwarzen Körper, abgibt. Eine Umhüllung mit einem niedrigen Emissionsgrad reflektiert den Großteil einer auftretenden Strahlung, insbesondere Wärmestrahlung. Besonders vorteilhaft beeinflusst eine Umhüllung mit niedrigem Emissionsgrad nicht oder nur geringfügig ein Messsignal, insbesondere Infrarotsignal, in den umschlossenen Sensoreinheiten und Lichtleitelementen.

Ferner wird vorgeschlagen, dass die Umhüllung derart vorgesehen ist, dass die Sensoreinheit und das Lichtleitelement zumindest im Bereich der Umhüllung zumindest überwiegend, besonders vorteilhaft vollständig, vor elektromagnetischer Störstrahlung geschützt sind.

Vorteilhaft ist das Lichtleitelement als Lichtleitfaser ausgebildet. Unter einer "Lichtleitfaser" soll insbesondere ein Lichtleitelement verstanden werden, das als Faser ausgebildet ist und dazu vorgesehen ist, auf Basis von Totalreflexion einen seitlichen Lichteinschluss zu erreichen. Unter einer Faser soll insbesondere ein, vorzugsweise flexibles, Element verstanden werden, das eine Dicke aufweist, die maximal 20 %, insbesondere maximal 10 %, vorteilhaft maximal 5 %, vorzugsweise maximal 1 %, einer Länge des Elements entspricht. Vorzugsweise weist die Faser einen zumindest ovalen, vorzugsweise kreisrunden, Querschnitt auf. Insbesondere weist die Glasfaser einen kleinsten Biegeradius von maximal 5 cm, insbesondere maximal 4 cm, vorteilhaft maximal 3 cm, auf. Insbesondere ist die Lichtleitfaser von Glas gebildet. Vorzugsweise weist die Lichtleitfaser im Zentrum einen größeren Brechungsindex auf als in zumindest einem Randbereich. Insbesondere unterliegt der Brechungsindex, ausgehend vom Zentrum zum Rand hin, einem abfallenden Gradienten. Insbesondere weist die Lichtleitfaser eine Kernfaser mit einem Durchmesser von zumindest 200 µm, insbesondere zumindest 300 µm, vorteilhaft zumindest 500 µm, auf. Insbesondere weist die Lichtleitfaser eine numerische Apertur von zumindest 0,1, vorteilhaft zumindest 0,2, und insbesondere von maximal 0,5, vorteilhaft von maximal 0,3, auf. Es kann insbesondere eine Anordnung der Sensoreinheit entfernt von dem Messpunkt erreicht werden.

Ferner wird vorgeschlagen, dass die Sensoreinheit an einer Position angeordnet ist, die sich von einer Position unmittelbar unter einer Messstelle unterscheidet. Unter "unmittelbar unter einer Messstelle" soll insbesondere verstanden werden, dass die Sensoreinheit in einer Position angeordnet ist, in der die Sensoreinheit durch eine gerade Linie senkrecht zu einer Oberfläche eines Bauteils, in der die Messstelle liegt, mit der Messstelle verbunden werden kann und welche vorzugsweise maximal 10 cm, insbesondere maximal 5 cm von der Messstelle entfernt ist. Insbesondere weist eine Position, die sich von einer Position unmittelbar unter einer Messstelle unterscheidet, einen seitlichen Abstand von der geraden Linie auf, welcher größer als zumindest 2 cm und vorzugsweise zumindest 5 cm ist. Es kann ein geringer Wärmeeintrag in die Sensoreinheit erreicht werden, wodurch auf zusätzliche Kühlelemente für elektronische Elemente der Sensoreinheit verzichtet werden kann.

Optisch zwischen einer Messoberfläche des Messpunkts und dem Lichtleitelement ist zumindest eine Filtereinheit angeordnet. Unter einer "Filtereinheit" soll insbesondere eine Einheit verstanden werden, die zumindest ein Filterelement aufweist. Unter einem "Filterelement" soll insbesondere ein Element verstanden werden, das dazu vorgesehen ist, zumindest einen Teil eines Spektrums elektromagnetischer Strahlung zu absorbieren. Insbesondere ist das Filterelement als Hochpassfilter ausgebildet und ist dazu vorgesehen, elektromagnetische Strahlung zu absorbieren, deren Wellenlänge kleiner ist als eine Grenzwellenlänge. Alternativ ist eine Ausgestaltung des Filterelements als Tiefpassfilter oder als Bandpassfilter denkbar. Insbesondere ist die Filtereinheit dazu vorgesehen, zumindest sichtbares Licht, insbesondere zumindest Licht mit einer Wellenlänge kleiner als 800 nm, insbesondere kleiner als 1000 nm, vorteilhaft kleiner als 1,2 µm, zu absorbieren. Erfindungsgemäß ist die Filtereinheit von zumindest einer Beschichtung auf einer Kochfeldplatte gebildet. Es kann insbesondere vermieden werden, dass sich das Lichtleitelement durch Absorption sichtbaren Lichts unnötig erwärmt. Insbesondere kann eine platzsparende Ausgestaltung erreicht werden. Insbesondere kann eine Messwertverfälschung vermieden werden.

Ferner wird eine zentrale Auswerteelektronik vorgeschlagen, die dazu vorgesehen ist, in Abhängigkeit von Messdaten des zumindest einen Infrarotsensors eine Temperaturermittlung vorzunehmen. Es kann somit insbesondere auf eine separate Auswerteeinheit des Infrarotsensors verzichtet werden, wodurch ein Strom- und Kühlbedarf des Infrarotsensors verringert werden kann und insbesondere bei einer Hausgerätvorrichtung mit einer Mehrzahl von Infrarotsensoren vorteilhaft eine Anzahl von benötigten Auswerteeinheiten verringert werden kann.

Ferner wird vorgeschlagen, dass die zentrale Auswerteeinheit in eine Steuer- und/oder Regeleinheit integriert ist. Unter einer "Steuer- und/oder Regeleinheit" soll insbesondere eine elektronische Einheit verstanden werden, die vorzugsweise dazu vorgesehen ist, zumindest die elektrischen Heizelemente zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Unter "integriert" soll insbesondere verstanden werden, dass die zentrale Auswerteeinheit mit der Steuer- und/oder Regeleinheit eine physische Einheit bildet und vorzugsweise, dass die zentrale Auswerteeinheit von der Recheneinheit der Steuer- und/oder Regeleinheit gebildet ist. Es kann somit vorteilhaft ein Bauteilbedarf der Hausgerätvorrichtung reduziert werden.

Vorzugsweise ist das Kochfeld als Induktionskochfeld ausgebildet.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Figur 1: eine schematische Darstellung eines Induktionskochfeldes mit einer Vorrichtung zur Temperaturermittlung,
- Figur 2: eine schematische Darstellung einer erfindungsgemäßen Umhüllung einer Sensoreinheit und eines Lichtleitelements.

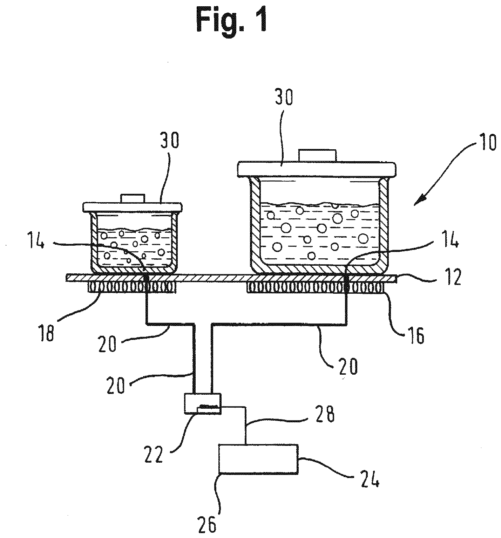

Figur 1 zeigt eine schematische Darstellung eines Induktionskochfelds 10 mit einer Kochfeldplatte 12 mit zwei Kochzonen, auf denen Garbehälter 30 aufgestellt sind. Im Bereich der Kochzonen sind unterhalb der Kochfeldplatte 12 zwei als Induktionsspulen ausgeführte elektrische Heizelemente 16, 17 angeordnet, mittels deren in den Garbehältern 30 enthaltenes Gargut erwärmt wird. Zu einer geeigneten Steuerung eines Erwärmungsprozesses der Garbehälter 30 durch eine Steuer- und/Regeleinheit 26 wird eine Temperaturüberwachung mittels einer Messung einer Intensität von abgegebenem Infrarotlicht der Garbehälter 30 durch einen Infrarotsensor 22 durchgeführt. Hierzu ist in jeder Kochzone eine als 15mm durchmessender kreiszylinderförmiger Bereich aus einem für Infrarotlicht transparenten Material ausgeführte Messstelle 14 ausgebildet, durch die Infrarotlicht durch die Kochfeldplatte 12 hindurchtritt und über Lichtleitelemente zu dem Infrarotsensor 22 geleitet wird. Die Lichtleitelemente sind als optische Fasern ausgeführt, in denen das Infrarotlicht durch innere Totalreflexion geleitet wird.

Der Infrarotsensor 22 ist von einem Halbleitersensor aus Indiumgalliumarsenid gebildet und darauf ausgelegt, insbesondere Intensitäten von Infrarotlicht in einem Wellenlängenbereich zwischen 1,2 µm und 2,4 µm zu messen. In dem Infrarotsensor 22 wird die Intensität eintreffenden Infrarotlichts gemessen, wobei eine Messung innerhalb einer Messdauer von 100 ms abgeschlossen ist, und Messdaten der Intensität als ein elektrisches Signal mit einer zu der Intensität des Infrarotlichts proportionalen Amplitude ausgegeben werden. Diese Messdaten werden über eine Datenverbindung 28 zu einer in eine Steuer- und Regeleinheit 26 integrierten zentralen Auswerteeinheit 24 übertragen, in der eine Temperaturbestimmung aus den Messdaten des Infrarotsensors 22 vorgenommen wird. Die Temperaturbestimmung wird durch eine Berechnung der entsprechenden Temperatur in einer Recheneinheit der Steuer- und Regeleinheit 26, welche die zentrale Auswerteeinheit 24 bildet, vorgesehen. Alternativ kann die Temperaturbestimmung durch einen Vergleich der Messdaten des Infrarotsensors 22 mit Referenzdaten in der zentralen Auswerteeinheit 24 durchgeführt werden. Die Steuer- und Regeleinheit 26 steuert aufgrund der Messdaten des Infrarotsensor 22 das elektrische Heizelement 16, 17 der der entsprechenden Messstelle 14 zugeordneten Kochzone derart an, dass eine von einem Benutzer über eine nicht dargestellte Bedieneinheit für die Kochzone angeforderte Heizleistung zur Verfügung gestellt wird.

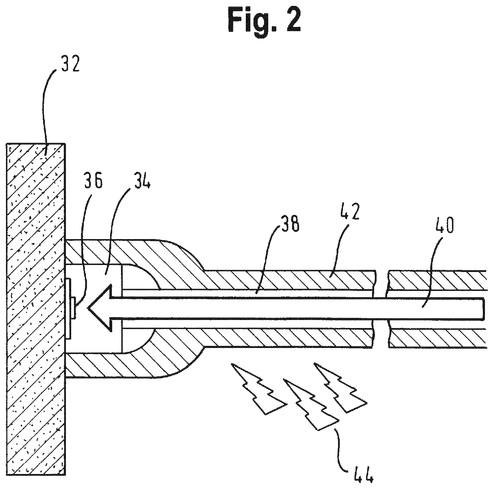

Figur 2 zeigt eine schematische Darstellung einer erfindungsgemäßen Umhüllung einer Sensoreinheit und eines Lichtleitelements. Auf einer Leiterplatte 32 ist eine Sensoreinheit 34 angeordnet. Die Sensoreinheit 34 weist zumindest einen Infrarotsensor 36 auf. In dem Infrarotsensor 36 wird die Intensität eintreffenden Infrarotlichts gemessen. Ein Lichtleitelement 38 ist mit der Sensoreinheit 34 optisch und mechanisch gekoppelt, so dass ein Infrarotmesssignal 40 mit möglichst geringen Verlusten dem Infrarotsensor zugeführt wird.

Zumindest im Bereich der Anschlussstelle zwischen Sensoreinheit 34 und Lichtleitelement 38 ist eine Umhüllung 42 vorgesehen. Die Umhüllung 42 kann als Beschichtung, beispielsweise ähnlich einem Farbanstrich, oder als montierbares Schirmelement ausgestaltet sein. Die Umhüllung umfasst ein Material, welches intransparent zumindest für Infrarotlicht 44 ist. Besonders vorteilhaft ist die Umhüllung auch intransparent für weitere elektromagnetische Störstrahlung 44. Die Störstrahlung 44 wird durch die Umhüllung 42 reflektiert oder absorbiert. Besonders vorteilhaft weist die Umhüllung 42 einen niedrigen Emissionsgrad auf, so dass die Störstrahlung nahezu vollständig reflektiert wird und die Umhüllung nicht selber aufgewärmt wird.

Die Störstrahlung entsteht beispielsweise als Wärmestrahlung innerhalb oder außerhalb des Systems und verfälscht die Messergebnisse des Infrarotsensors. Durch die Erfindung wird diese Störstrahlung erheblich reduziert und die Genauigkeit bei der Tempertaturermittlung deutlich verbessert. Durch den Einsatz einer Umhüllung mit niedrigem Emissionsgrad kann die Genauigkeit des Systems weiter verbessert werden.

### Bezugszeichen

- 10: Induktionskochfeld
- 12: Kochfeldplatte
- 14: Messstelle
- 16: Elektrisches Heizelement
- 18: Elektrisches Heizelement
- 20: Lichtleitelement

- 22: Infrarotsensor
- 24: Zentrale Auswerteeinheit
- 26: Steuer- und Regeleinheit
- 28: Datenverbindung
- 30: Garbehälter
- 32: Leiterplatte
- 34: Sensoreinheit
- 36: Infrarotsensor
- 38: Lichtleitelement
- 40: Infrarotsignal
- 42: Umhüllung
- 44: Störstrahlung

## Patentansprüche

1. Kochfeld (10) mit einer Kochfeldplatte (12), die eine Kochzone mit einer Messstelle (14) aufweist, und mit einer Hausgerätevorrichtung mit zumindest einem Lichtleitelement (38), das zumindest teilweise transparent für elektromagnetische Strahlung ist, und mit zumindest einer Sensoreinheit (34), die zumindest einen Infrarotsensor (36) aufweist und dazu vorgesehen ist, eine Intensität von durch das Lichtleitelement (38) transmittiertem Infrarotlicht zu detektieren, wobei in einem Bereich einer optischen Kopplung des Lichtleitelements (38) und der Sensoreinheit (34) eine zumindest für Infrarotlicht intransparente Umhüllung (42) vorgesehen ist, **gekennzeichnet durch** zumindest eine Filtereinheit, welche optisch zwischen einer Messoberfläche der Messstelle (14) und dem Lichtleitelement (38) angeordnet und von einer Beschichtung der Kochfeldplatte (12) gebildet ist.

2. Kochfeld (10) nach Anspruch 1, **dadurch gekennzeichnet, dass** die Umhüllung (42) als Beschichtung ausgebildet ist

3. Kochfeld (10) nach Anspruch 1, **dadurch gekennzeichnet, dass** die Umhüllung (42) als montierbares Schirmelement ausgebildet ist.

4. Kochfeld (10) nach Anspruch 3, **dadurch gekennzeichnet, dass** die Umhüllung (42) gehäuseförmig ist, wobei dieses Gehäuse form- und/oder kraftschlüssig mit der Sensoreinheit (34) und dem Lichtleitelement (38) verbunden ist.

5. Kochfeld (10) nach einem der vorhergehenden Ansprüche, **dadurch gekennzeichnet, dass** die Umhüllung (42) derart vorgesehen ist, dass die Sensoreinheit (34) und das Lichtleitelement (38) zumindest im Bereich der Umhüllung (42) vollständig vor elektromagnetischer Störstrahlung (44) geschützt sind.

6. Kochfeld (10) nach einem der vorhergehenden Ansprüche, **dadurch gekennzeichnet, dass** das Lichtleitelement (38) als Lichtleitfaser ausgebildet ist.

7. Kochfeld (10) nach einem der vorhergehenden Ansprüche, **dadurch gekennzeichnet, dass** die Sensoreinheit (34) an einer Position angeordnet ist, die sich von einer Position unmittelbar unter der Messstelle (14) unterscheidet.

8. Kochfeld (10) nach einem der vorhergehenden Ansprüche, **dadurch gekennzeichnet, dass** eine zentrale Auswerteelektronik (24) vorgesehen ist, die dazu ausgebildet ist, in Abhängigkeit von Messdaten des zumindest einen Infrarotsensors (36) eine Temperaturermittlung vorzunehmen.

9. Kochfeld (10) nach einem der vorhergehenden Ansprüche, **dadurch gekennzeichnet, dass** die zentrale Auswerteelektronik (24) in eine Steuer- und/oder Regeleinheit (26) integriert ist.

## Claims

1. Cooking hob (10) with a cooking hob plate (12), which has a cooking zone with a measuring point (14) and with a household appliance device having at least one light conductor element (38), which is at least partially transparent for electromagnetic radiation, and with at least one sensor unit (34), which has at least one infrared sensor (36) and is provided to detect an intensity of infrared light transmitted by the light conductor element (38), wherein a casing (42) which is non-transparent at least for infrared light is provided in a region of a visual coupling of the light conductor element (38) and the sensor unit (34), **characterised by** at least one filter unit, which is arranged visually between a measuring surface of the measuring point (14) and the light conductor element (38) and is formed by a coating of the cooking hob plate (12).

2. Cooking hob (10) according to claim 1, **characterised in that** the casing (42) is embodied as a coating.

3. Cooking hob (10) according to claim 1, **characterised in that** the casing (42) is embodied as a mountable shielding element.

4. Cooking hob (10) according to claim 3, **characterised in that** the casing (42) has a housing shape, wherein this housing is connected with a form and/or force fit to the sensor unit (34) and the light conductor element (38).

5. Cooking hob (10) according to one of the preceding claims, **characterised in that** the casing (42) is provided so that the sensor unit (34) and the light conductor element (38) are protected entirely from electromagnetic radiation (44) at least in the region of the casing (42).

6. Cooking hob (10) according to one of the preceding claims, **characterised in that** the light conductor element (38) is embodied as an optical fibre.

7. Cooking hob (10) according to one of the preceding claims, **characterised in that** the sensor unit (34) is arranged at a position which differs from a position immediately below the measuring point (14).

8. Cooking hob (10) according to one of the preceding claims, **characterised in that** central evaluation electronics (24) are provided, which is embodied to determine a temperature as a function of measuring data of the at least one infrared sensor (36).

9. Cooking hob (10) according to one of the preceding claims, **characterised in that** the central evaluation electronics (24) are integrated into a control and/or regulation unit (26).

## Revendications

1. Champ de cuisson (10) avec une plaque de champ de cuisson (12) présentant une zone de cuisson avec un point de mesure (14) et avec un dispositif d'appareil ménager avec au moins un élément conducteur de lumière (38) au moins partiellement transparent au rayonnement électromagnétique et avec au moins une unité de capteurs (34) présentant au moins un capteur infrarouge (36) et prévue afin de détecter une intensité de la lumière infrarouge transmise à travers l'élément conducteur de lumière (38), dans lequel une enveloppe (42) opaque au moins à la lumière infrarouge est prévue dans une zone d'un couplage optique de l'élément conducteur de lumière (38) et de l'unité de capteurs (34), **caractérisé par** au moins une unité de filtration, disposée optiquement entre une surface de mesure du point de mesure (14) et l'élément conducteur de lumière (38) et constituée par un revêtement de la plaque de champ de cuisson (12).

2. Champ de cuisson (10) selon la revendication 1, **caractérisé en ce que** l'enveloppe (42) est formée sous la forme d'un revêtement.

3. Champ de cuisson (10) selon la revendication 1, **caractérisé en ce que** l'enveloppe (42) est formée sous la forme d'un élément de blindage montable.

4. Champ de cuisson (10) selon la revendication 3, **caractérisé en ce que** l'enveloppe (42) est en forme de carcasse, dans lequel cette carcasse est reliée par complémentarité de formes et/ou de forces à l'unité de capteurs (34) et à l'élément conducteur de lumière (38).

5. Champ de cuisson (10) selon l'une des revendications précédentes, **caractérisé en ce que** l'enveloppe (42) est prévue de sorte que l'unité de capteurs (34) et l'élément conducteur de lumière (38) sont intégralement protégés du rayonnement parasite électromagnétique (44) au moins dans la zone de l'enveloppe (42).

6. Champ de cuisson (10) selon l'une des revendications précédentes, **caractérisé en ce que** l'élément conducteur de lumière (38) est formé sous la forme d'une fibre optique.

7. Champ de cuisson (10) selon l'une des revendications précédentes, **caractérisé en ce que** l'unité de capteurs (34) est disposée en une position qui diffère d'une position immédiatement sous le point de mesure (14).

8. Champ de cuisson (10) selon l'une des revendications précédentes, **caractérisé en ce qu'**une électronique d'exploitation centrale (24) est prévue, laquelle est formée afin d'entreprendre en fonction de données de mesure de l'au moins un capteur infrarouge (36) une détermination de température.

9. Champ de cuisson (10) selon l'une des revendications précédentes, **caractérisé en ce que** l'électronique d'exploitation centrale (24) est intégrée à une unité de commande et/ou de régulation (26).
